# EUROPEAN PATENT APPLICATION

(11) **EP 4 840 797 A1**
(43) Date of publication of application: **18.11.2026**
(21) Application number: 25176593.9
(22) Date of filing: 15.05.2025
(51) Int. Cl.: B65G 15/44, B65G 47/51, A24C 5/35, A24C 5/32

(54) **VARIABLE CAPACITY STORAGE FOR ROD-LIKE ARTICLES OF THE TOBACCO INDUSTRY AND METHOD FOR TRANSPORTING ROD-LIKE ARTICLES**

(71) Applicant: International Tobacco Machinery Poland Sp. z o.o., 26-600 Radom (PL)
(72) Inventor: OWCZAREK, Radoslaw, 26-600 Radom (PL); UGREWICZ, Grzegorz, 26-600 Radom (PL)
(74) Representative: Markieta, Jaroslaw Franciszek

(57) **Abstract**

The subject of the application is a variable-capacity storage (1, 1', 1") for rod-like articles (4) of the tobacco industry stored in the form of a mass flow (S) consisting of multiple layers of rod-like articles (4), provided with at least two conveyors (2, 3) for conveying rod-like articles in the form of a mass flow (S) located one above the other, wherein two adjacent conveyors form a pair (P) of conveyors comprising a lower conveyor (2) and an upper conveyor (3), at least one conveyor in the pair (P) of conveyors being movable relative to the other, wherein moving at least one conveyor (2, 3) in the pair (P) of conveyors (2, 3) alters the capacity of the storage (1, 1', 1"). The storage device according to the invention is characterized in that it comprises a transfer unit (5) arranged to transport rod-like articles (4) from the lower conveyor (2) upwards to the upper conveyor (3), wherein the transfer unit (5) is provided with an inner conveyor (6) operating at a second speed (v2) smaller than the first speed (v1) of the lower conveyor (3), and an outer conveyor (5) operating at a third speed (v3) larger than the first speed (v1) of the lower conveyor (3). The subject of the application is also a method of transporting rod-like articles.

## Description

The object of the invention is a variable capacity storage for rod-like articles of the tobacco industry and a method for transporting rod-like articles.

The invention is applicable to tobacco industry production lines where there is a need for a continuous flow of rod-like articles between cooperating machines with a time-varying capacity, when the capacity of supplying the storage with the articles and receiving the articles from the storage differs. Rod-like articles are understood to be finished products such as cigarettes containing tobacco for smoking as well as articles containing processed tobacco for heating (so-called 'heat-not-burn' articles), and semi-finished products such as filter rods made from one type of material as well as from multiple segments. An example of a line comprising a machine manufacturing heat-not-burn articles with a packer is an arrangement of machines with temporarily fluctuating capacity or temporarily stopped due to the need to fix the malfunction. The transfer of products in such a line takes place in a multilayer flow, i.e. as a mass flow. A typical solution is the use of a variable-capacity storage facility, whereby the storage capacity ensures that if one machine is temporarily stopped, the other may continue to operate for some time.

Storages consisting of conveyors in linear and circular configurations are known in the prior art. A variable-capacity storage system containing conveyors in a circular configuration is known, for example, from patent EP2219480B1, wherein the flow of rod-like articles is carried out in such a way that articles delivered to the upper part of the storage system pass progressively onto lower-positioned conveyors.

Patent EP3514086B1 discloses a storage facility provided with conveyors in a linear configuration, wherein the flow of rod-like articles is carried out in such a way that the articles pass onto conveyors positioned lower and lower.

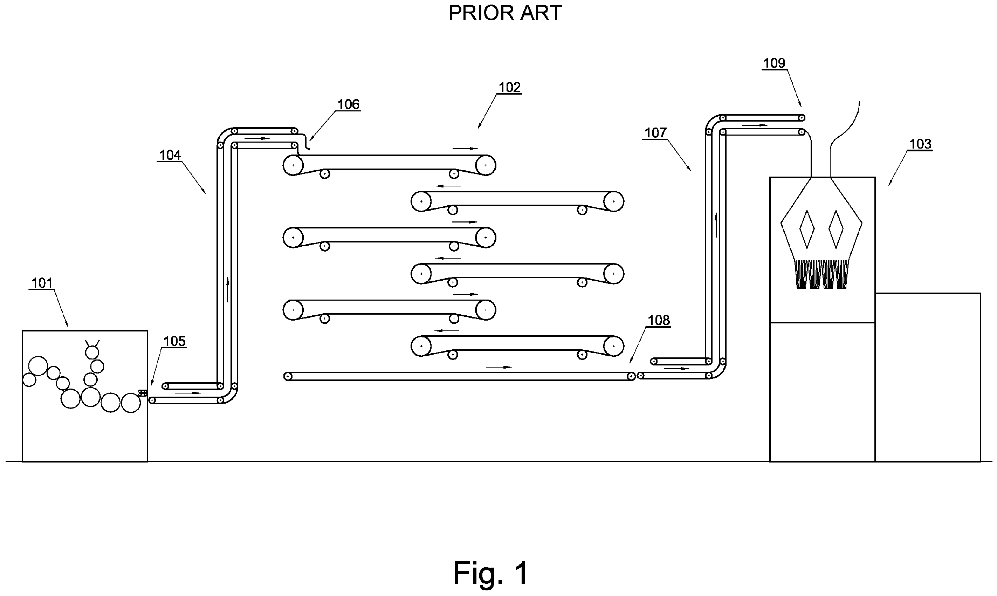

Variable capacity storages are often used between the manufacturing and packaging machines. Typically, the tobacco manufacturing machine has a low-positioned outlet, while the product packaging machine has its inlet positioned high above the hopper of the packaging machine and requires products to be fed from the feeding machine at a much higher height than the outlet of the manufacturing machine. There is a demand among tobacco manufacturers for rod-like storage facilities where the flow of products would be carried out from the bottom upwards, with the demand refers to FIFO (first in first out) storages, i.e. where the flow is only in one direction during production. Variable-capacity storages are known, in which the flow is carried out from top to bottom. For such a storage configuration (Fig. 1) comprising a manufacturing machine 101 (machine fragment shown), a variable capacity storage 102 and a packaging machine 103 (machine fragment shown), conveyors must be provided that connect these machines and ensure the flow between them. Conveyors 104 convey the rod-like articles from the bottom from the outlet 105 of the manufacturing machine 101 upwards to the inlet 106 of the storage 102, and further conveyors 107 are provided behind the storage, which convey the articles from the outlet 108 of the storage upwards to the inlet 109 of the packaging machine. The transport of the rod-like articles is then performed by a conveyor arrangement in which the direction of flow of the rod-like articles is altered. The flow repeatedly alters direction from horizontal to vertical and vice versa, which can lead to damage to the articles as the articles change position relative to each other in the flow. Transport in vertical channels has a damaging effect on products due to the high pressures at the bottom of the channel. There is therefore a need for production lines to be equipped with a storage with a bottom-up flow and as few conveyors as possible that alter the direction of the product flow, in order to minimize the risk of damage to the products being conveyed.

The essence of the invention is a variable capacity storage for tobacco rod-like articles stored in the form of mass flow consisting of multiple layers of rod-like articles, provided with at least two conveyors, for conveying the rod-like articles in the form of mass flow, positioned one above the other. Any two adjacent conveyors form a pair of conveyors comprising a lower conveyor and an upper conveyor, and at least one conveyor in the pair of conveyors is movable relative to the other, the moving of the at least one conveyor in the pair of conveyors alters the storage capacity. The storage unit is characterized in that it comprises a transfer unit configured to transport the rod-like articles from the lower conveyor, upwards to the upper conveyor, the transfer unit being provided with an inner conveyor and an outer conveyor. The inner conveyor operates at a second speed lower than the first speed of the lower conveyor, and the outer conveyor operates at a third speed higher than the first speed of the lower conveyor.

The above-described relations between conveyor speeds are necessary for the multilayer stream to have a laminar flow after being received from the lower conveyor, i.e. to flow undisturbed without relocation of rod-like articles during the change of direction from linear to arcuate direction during the transfer from the lower conveyor to the upper conveyor in a pair of conveyors and during transport along the arcuate path. The production lines may be designed with various numbers of layers of rod-like articles in the mass flow due to the type of product and the types of machinery. The storage as in the invention may be used accordingly for a various number of flow layers (varying thickness of the flow). The storage according to the invention has a defined inner and outer conveyor velocity relative to the velocity of the lower conveyor for each pair of a lower conveyor and an upper conveyor, the inner and outer conveyor guide the flow of articles on both sides of this flow, so the velocity relation of the two outer layers of the arcuate mass flow relative to each other is maintained. It is therefore possible to control the flow independently of the applied flow thickness.

The storage is characterized in that, in the transfer unit, the inner conveyor takes the form of a transport wheel rotating at such a rotational speed that its carrying surface provided with humps moves at a second speed.

The typical solution known for transferring articles to a higher conveyor is to wind a belt or chain around a wheel that is in contact with the articles on a lower conveyor or a vertical conveyor possibly inclined from the vertical. The disadvantage of such a solution is that the rod-like articles move at the same speed both on the arcuate path where the articles are transferred to the higher level (to the carrying surface of the upper conveyor) and then after the transfer to this higher level (to the horizontal section of the upper conveyor). According to the invention, the transfer of rod-like articles from the lower conveyor to the upper conveyor is provided by means of a wheel having its own drive, i.e. independent of the upper conveyor, generally of the conveyor to which the articles are fed. Due to the kinematics of the multi-conveyor storage system, which is dependent on the varying storage capacity, the individual conveyors may have their speed momentarily adjusted in order to maintain the stability of the storage system's operation, in particular the continuity of the flow of articles through the storage system. In the storage according to the invention, these momentary adjustments do not affect the transfer of articles between the individual conveyors (neighbouring conveyors may have different speeds). According to the invention, the carrying surface of the higher situated conveyor, i.e. the upper conveyor, is kinematically independent of the carrying surface of the wheel, which takes part in the transfer of articles between conveyors. The humps on the carrying surface of the wheel constituting the inner conveyor enhance the transfer of the wheel's motion to the rod-like articles, namely to move the mass flow of articles upwards in a controlled manner without slippage.

The storage is characterized in that in the transfer unit the inner conveyor comprises a transport chain provided with humps arranged such that its carrying surface moves at a second speed.

It is possible to build an inner conveyor that comprises a chain with humps on the carrying surface, which ensure that the movement of the chain is effectively transferred to the rod-like articles accumulated in the transfer channel. A conveyor built in this way effectively implements the movement of the mass flow of articles without slippage. The risk of slippage of the mass flow in relation to the carrying surface of the inner conveyor as well as the outer conveyor is eliminated.

The storage is characterized in that in the transfer the outer conveyor unit comprises a chain provided with humps.

The inner and outer conveyors are provided with humps to ensure efficient transfer of articles to the upper conveyor. The use of the humps in the transfer unit ensures that the position of the rod-like articles in relation to each other in the mass flow is maintained, particularly along the arcuate path. The humps perform the function of supporting the rod-like articles during the flow, whereby, during movement along the arcuate path, the direction of action on the rod-like articles is variable, generally always including a vertical component.

It is advantageous to use humps, particularly cylindrical humps, which, due to their shape, are best adapted to the spatial structure formed by rod-like articles in the mass flow. Humps with rectangular or triangular cross-sections also effectively support the mass flow.

The storage is characterized in that the transfer unit is furthermore provided with a pre-stabilizer positioned above the lower conveyor configured to stabilize the mass flow area in front of the inner conveyor, preventing uplift of the mass flow.

The pre-stabilizer comes into contact with the upper layer of the mass flow immediately before the flow enters the transfer unit, the pre-stabilizer holds this layer and ensures that the rod-like articles in the mass flow stably maintain their position in the mass flow, as there is no retraction of the rod-like articles in the flow. The upper layer of the linear flow on the lower conveyor becomes the inner layer of the arcuate flow in the transfer unit, and the lower layer of the linear flow on the lower conveyor becomes the outer layer of the arcuate flow in the transfer unit.

Advantageously, the pre-stabilizer is a conveyor located parallel to the lower conveyor or convergent with the lower conveyor.

Both the stabilizer in the form of a conveyor and a slide are simple solutions and, in addition, their angular position can be adjusted. An appropriately selected fourth speed of the pre-stabilizer relative to the first speed of the lower conveyor makes it possible to achieve the effect of no uplift of rod-like articles.

Advantageously, the pre-stabilizer is provided with humps.

The use of the humps stabilizes the flow of articles into the transfer unit.

Advantageously, the fourth speed of the pre-stabilizer is equal to the first speed of the lower conveyor.

Advantageously, the fourth speed of the pre-stabilizer is larger than the first speed of the lower conveyor.

Advantageously, the pre-stabilizer is in the form of a slide located parallel to the lower conveyor or convergent with the lower conveyor.

The use of a slide constitutes a simple and inexpensive alternative to a chain conveyor.

Advantageously, the inner conveyor, the outer conveyor and the pre-stabilizer have a common drive.

The use of a single common drive for the conveyors ensures that the kinematic relation between the conveyors is maintained and reduces the cost of building the transfer unit.

The storage is characterized in that it is configured so that the working directions of the conveyors are alternatively reversed, so that the mass flow is transferred from the upper conveyor to the lower conveyor.

The storage is provided with the possibility to connect the storage in a rod-like article transfer configuration from bottom to top as well as from top to bottom. In the top-to-bottom configuration, it is possible to empty the storage not via the uppermost conveyor in the direction towards the packaging machine, but in the opposite direction to the working one, namely from top to bottom via the lowermost conveyor.

Advantageously, the upper conveyor and the lower conveyor are circularly shaped and concentric with respect to the vertical axis.

Advantageously, the upper conveyor and the lower conveyor are linearly shaped.

The essence of the invention is also a method for transporting a stream of rod-like articles of the tobacco industry transversely to the axes of the rod-like articles from the lower conveyor for transporting the stream of rod-like articles to the upper conveyor for transporting the stream of rod-like articles, the lower conveyor and the upper conveyor being movable with relation to each other, wherein the rod-like articles are transferred from the lower conveyor to the upper conveyor along an arcuate path by means of a transfer unit. The method is characterized in that when the position of the upper conveyor and the lower conveyor is altered relative to each other, the position of the transfer unit over the carrying surface of the lower conveyor alters and the storage capacity alters, the outer layer of rod-like articles in the stream in the transfer channel via the outer conveyor is given a third speed larger than the speed of the lower conveyor, the inner layer of rod-like articles in the stream in the channel of the conveying unit via the inner transfer conveyor is given a second speed smaller than the speed of the lower conveyor.

The method is characterized in that the flow of the stream from the lower conveyor into the channel of the transfer unit is also assisted by means of a pre-stabilizer located above the lower conveyor.

The method is characterized in that, alternatively, the direction of operation of the conveyors is reversed so that rod-like articles in the form of mass flow are transferred from the upper conveyor to the lower conveyor.

The storage according to the invention may be used in any manufacture line of the tobacco industry in which the cooperating machines temporarily have different production capacities. Compared to storages in which the stored products move from top to bottom to lower and lower levels, the storage according to the invention ensures that the production line upstream and downstream of the storage may have fewer conveyors altering the direction of the mass flow, so the number of places where the direction of flow is altered and the risk of damage to the products will be reduced.

The storage according to the invention has a small footprint on the production floor.

The object of the invention is illustrated in detail in advantageous embodiments presented in the drawing in which:
Fig. 1 shows an exemplary production line of the state of the art,
Fig. 2 shows a variable capacity storage in the first embodiment,
Fig. 3 shows a transfer unit in the first embodiment,
Fig. 4 shows the transfer unit of Fig. 3 with speed distribution in the mass flow,
Fig. 5 shows the transfer unit of Fig. 3 with a drive system,
Fig. 6 shows a variable capacity storage in the second embodiment,
Fig. 7 shows the transfer unit in the second embodiment,
Fig. 8 shows a view of a storage in a linear configuration or is a developed view of a storage in a circular configuration, close to the minimum capacity,
Fig. 9 shows a view of the storage as in Fig. 8, with the storage in a position close to the maximum capacity,
Fig. 10 shows a developed view top view of a storage in a circular configuration, and
Fig. 11 shows a variable capacity storage according to the invention in a production line comprising a production machine and a packaging machine.

Fig. 1 shows a fragment of a production line of the state of the art, with rod-like articles produced on the production machine 101 being conveyed in a mass flow which flows through a variable capacity storage 102 and enters the packaging machine 103. For the sake of simplicity, the mass flow is not shown and the flow is indicated just by arrows. The storage 102 comprises conveyors movable relative to each other, which can be built in a linear or circular configuration.

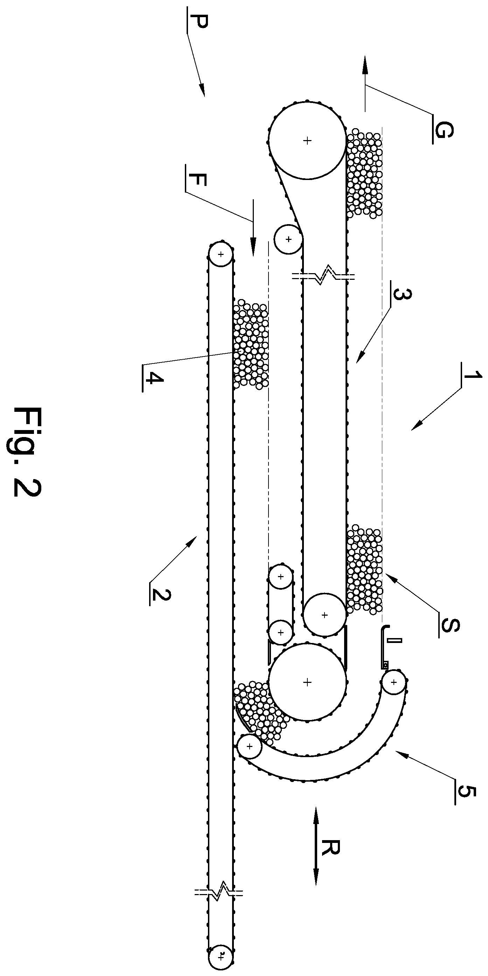

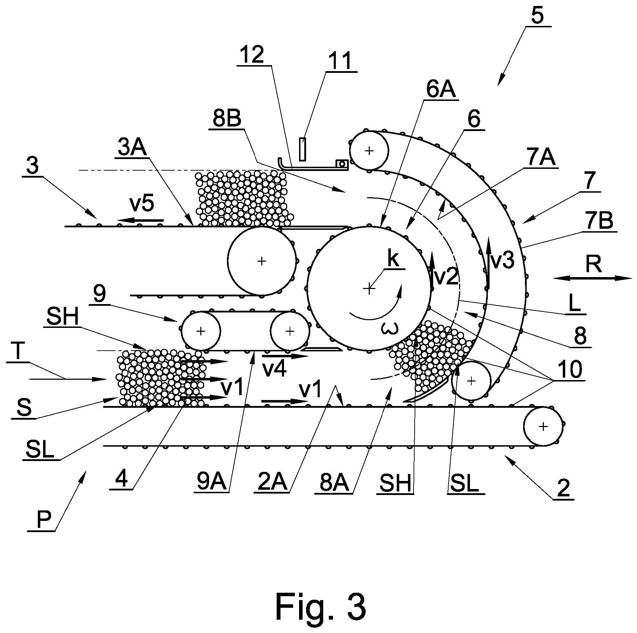

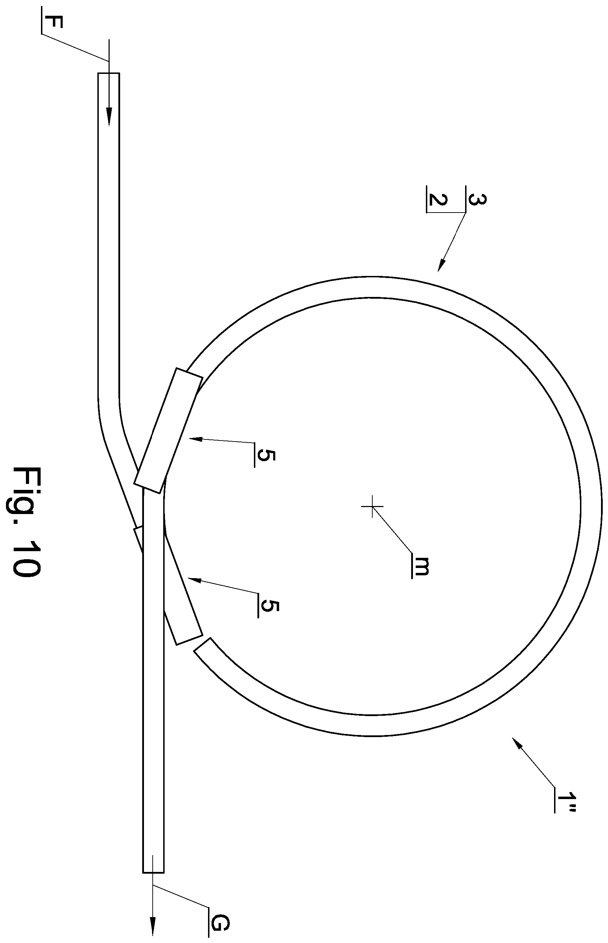

Fig. 2 shows a storage 1 containing two conveyors, namely a lower conveyor 2 and an upper conveyor 3, which are arranged to convey rod-like articles 4 of the tobacco industry in a mass flow S (i.e. a multilayer flow). In Fig. 2 as well as in the other figures, for simplicity, the mass flow of rod-like articles is only shown in a few sections whereas in the implementation embodiments the mass flow of rod-like articles is continuous. Either belt or chain conveyors may be used in the storage. The lower conveyor 2 and the upper conveyor 3 form a pair P of conveyors, where at least one of the conveyors is movable relative to the other. In the embodiment shown in Fig. 2, the upper conveyor 3 is repositionable (indicated by a bi-directional arrow R) relative to the lower conveyor 2, which does not alter its position. By 'repositionable ' is meant that the upper conveyor 3 as a whole together with the transfer unit 5, discussed further below, may alter its position relative to the lower conveyor 2, whereby the alteration in position is related to a horizontal alteration in position. In this embodiment, the lower conveyor 2 and upper conveyor 3 are linear conveyors, with the upper conveyor 3 enabled to move along the lower conveyor 2. The reverse is possible, with the lower conveyor 2 being repositionable relative to the upper conveyor 3. In addition to the linear configuration, a circular configuration is possible. Lower conveyor 2 and upper conveyor 3 may be in the form of circular conveyors positioned one above the other (conveyors carrying articles on circular paths of the same diameter, with a vertical axis of rotation), in which case the repositioning of one conveyor relative to the other is effected by rotating the conveyor while maintaining a fixed plane of rotation (storage in this configuration shown in Fig. 10). The drives of the conveyors are not shown in the figure, but the drive may be installed on one of the winding rollers of the conveyors 2, 3. The inlet of the storage 1 is indicated as F and the outlet as G. Rod-like articles 4 are transferred from the lower conveyor 2 to the upper conveyor 3. For this purpose, a transfer unit 5 is provided in the storage 1 for transferring the mass flow S of the rod-like articles 4 shown enlarged in Fig. 3.

The transfer assembly 5 (Fig. 3) is arranged to receive the mass flow S of rod-like articles 4 and to transfer this flow from the lower conveyor 2 to the upper conveyor 3. The carrying surface 2A of the lower conveyor 2 moves at a first velocity v1. The rod-like articles forming the mass flow located on the carrying surface 2A of the lower conveyor 2 therefore also move at a velocity v1 in any layer of the mass flow. The rod-like articles 4 are situated in the mass flow S transverse to the direction T of the mass flow S, i.e. the axes of the rod-like articles are situated transverse to the direction T. The transfer assembly 5 is arranged to transfer the rod-like articles 4 forming the mass flow S, from the lower conveyor 2 to the upper conveyor 3 along an arcuate path. The transfer assembly 5 comprises an inner transfer conveyor 6 and an outer transfer conveyor 7, which cooperate with each other and together transport the rod-like articles 4 from the lower conveyor 2 to the upper conveyor 3. The inner transfer conveyor 6 and the outer transfer conveyor 7 are positioned so that the carrying surface 6A of the inner transfer conveyor 6 and the carrying surface 7A of the outer transfer conveyor 7 face each other to form a transfer channel 8 for transferring the mass flow S of rod-like articles 4 from the lower conveyor 2 to the upper conveyor 3. The carrying surface 6A of the inner conveyor 6 moves with a second speed v2, and the carrying surface 7A of the outer conveyor 7 moves at a third speed v3. In the example shown, the storage 1 further comprises a pre-stabilizer 9, in the form of a short conveyor, situated above the lower conveyor 2, for assisting the inflow of the mass flow S of rod-like articles 4 into the transfer channel 8. The carrying surface 9A of the pre-stabilizer 9 moves at a fourth velocity v4. The pre-stabilizer 9 remains in contact with the uppermost layer SH of the mass flow S, and the lower conveyor 2 remains in contact with the lowermost layer SL of the mass flow S. The fourth velocity v4 of the pre-stabilizer 9 may be equal to the first velocity v1 of the lower conveyor 2, in which case the entire mass flow S including the outer layers SH and SL of the rod-like articles 4 moves at the same first velocity v1. The fourth velocity v4 of the pre-stabilizer 9 may be slightly larger than the first velocity v1 of the lower conveyor 2, then the uppermost layer SH of rod-like articles in the mass flow will move at a velocity slightly greater than the velocity of the lowermost layer SL of rod-like articles 4 in the mass flow S.

The range of relative movement between the lower conveyor 2 and the upper conveyor 3 is arranged such that when the position of the conveyors 2, 3 relative to each other alters, the transfer assembly 5, and more specifically the inlet 8A of the transfer channel 8 remains above the carrying surface 2A of the lower conveyor 2. The transfer assembly 5 is arranged to transport rod-like articles 4 both while altering the position of the conveyors 2, 3 relative to each other and without altering their relative position. The carrying surface 3A of the upper conveyor 3 moves with a fifth speed v5, whereby the fifth speed v5 is equal to the first speed v1 only if the capacity of the feeding machine (e.g. manufacturing machine) is equal to the capacity of the receiving machine (e.g. packaging machine).

In the shown embodiment, all conveyors are provided with humps 10 which enhance the flow S of the rod-like articles 4. The humps 10 are located on the carrying surface 6A of the inner conveyor 6 and on the carrying surface 7A which is the chain surface 7B of the outer conveyor 7. In the embodiments shown, the humps 10 are in the form of halves of a cylinder having a diameter close to the diameter of the rod-like article 4, the diameter of the hump 10 may be less than, equal to or greater than the diameter of the rod-like article 4. The length of the hump 10 may be equal to or less than the width of the carrying surface of the conveyor (dimension perpendicular to the plane of the drawing). The hump 10 may have a two-part form, i.e. there are, for example, two coaxial short humps arranged on the carrying surface symmetrically with respect to the axis determining the direction of transport. The humps 10 may have a larger number of sections, which together function as a single hump across the entire width of the carrying surface. The humps 10 assist the flow of articles, namely, they help to transfer the drive from the conveyors to the mass flow both on the horizontal sections of the lower conveyor 2, the upper conveyor 3 and in the transfer channel 8, where the humps 10 help to move the flow S up the transfer channel 8. Humps of any cross-section may be provided on the carrying surfaces of the conveyors. The shape and arrangement of the humps 10 is adapted to the arrangement of rod-like articles 4 in the mass flow S, which arrangement is essentially similar to a honeycomb arrangement. During operation of the storage facility 1, the rod-like articles 4 in the mass flow S are essentially parallel to the axis of the humps 10. During the operation of the storage 1, the rod-like articles 4 in the mass flow S are essentially parallel to the axes of the humps 10. In addition to the shape of half a cylinder, the humps 10 may have any other shape suitable for transporting the mass flow of rod-like articles on the carrying surface, for example, essentially triangular, square or rectangular with rounded edges in cross-section, so as not to damage the side surface of the rod-like articles 4.

The conveyors in the storage according to the invention may take the form of belts or chains with humps on their carrying surface. In the embodiments shown, the carrying surface 6A of the inner transfer conveyor 6 and the carrying surface 7A of the outer transfer conveyor 7, like the other conveyors, are provided with humps 10 having a cylindrical surface, wherein the humps 10 are located transversely to the direction of movement of the inner transfer conveyor 6 and the outer transfer conveyor 7. It is possible to make conveyors provided with belts whose carrying surface is corrugated, where the corrugations or waves positioned transversely to the length of the belt are adapted to the diameter of rod-like articles.

In the embodiment shown in Fig. 3, the inner transfer conveyor 6 has the form of a wheel rotating at a rotational speed ω around the axis k (the drive of the wheel and conveyors is not shown). The carrying surface 6A, i.e. the circumferential surface of the wheel provided with humps 10, is set to a second speed v2. The humps 10 are located parallel to the axis of rotation k of the inner transfer conveyor 6.

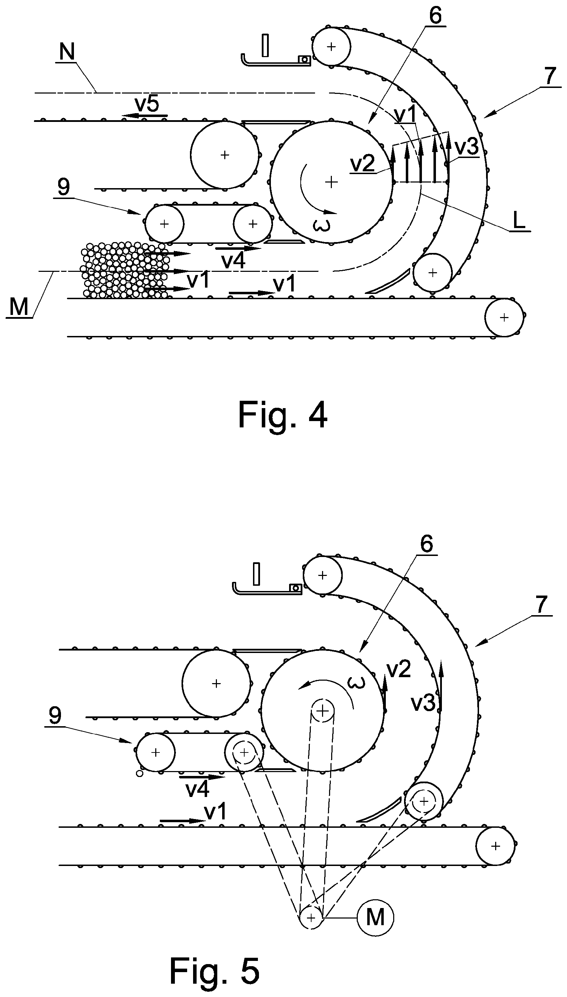

In the transfer unit 5, the second speed v2 of the inner transfer conveyor 6 and the third speed v3 of the outer transfer conveyor 7 are not equal, and their values depend on the first speed v1 of the lower conveyor 2. The second speed v2 is smaller than the first speed v1, while the third speed v3 is larger than the first speed v1. The relations between the speeds are represented by the size of the arrows in Fig. 4. The stream S flows through the channel 8 along the arcuate track L. In the figure, the track L is marked with a dotted line centrally in the transfer channel 8. The outer layers of the mass flow S in the transfer channel 8 are therefore moved at different speeds. The aforementioned uppermost layer SH on the lower conveyor 2 becomes the inner layer during transport in the transfer channel 8 and is adjacent to the carrying surface 6A of the inner transfer conveyor 6. The aforementioned lowermost layer SL on the lower conveyor 2 becomes the outer layer during transport in the transfer channel 8 and is adjacent to the carrying surface 7A of the outer transfer conveyor 7. Due to the above kinematic relations, in the inlet zone 8A to the transfer channel 8, there is a gentle, i.e. non-loading or slightly mechanically loading, transformation of rod-like articles 4 forming a mass flow, from a linear mass flow S (moving along a linear path M) to an arcuate mass flow S (moving along an arcuate path L). The arcuate flow of rod-like articles 4 is achieved while maintaining a second velocity v2 for the inner layer of the flow and a third velocity v3 for the outer layer of the flow along the transfer channel 8 from the inlet 8A to the outlet 8B of the transfer channel 8. The arcuate mass flow S maintains its integrity due to the close arrangement of rod-like articles S forming a self-sustaining honeycomb-structured mass flow under the influence of gravity. In the central part of the mass flow S, essentially along the arcuate path L, the rod-like articles 4 move at a speed equal to the first speed v1. In the outlet zone 8B, the arcuate flow is transformed into a linear flow, which will then be moved by the upper conveyor 3 along the path N. The above kinematic relation ensure a stable flow of rod-like articles 4 from the lower conveyor 2 to the upper conveyor 3.

The inner conveyor 6 is not coupled, i.e. it is not kinematically connected to the upper conveyor 3, which is driven independently of the inner conveyor 6 and the outer conveyor 7. When the manufacture line provided with the storage 1 according to the invention is operating, the capacity of the storage 1 may be kept constant, but often the capacities of the feeding machine (e.g. a rod-making machine) and the receiving machine (e.g. a packaging machine) vary. In Fig. 3, the speed of the upper conveyor 3 is marked as the fifth speed v5. When there is a difference in the capacity of the feeding and receiving conveyors, the conveyors in the storage alter their position relative to each other, maintaining the continuity of mass flow necessary for the correct operation of the storage 1. Moreover, the speeds of the conveyors in individual pairs P can be adjusted. The correction may apply to the first speed v1, the fifth speed v5 and the position of the conveyors relative to each other. Since the inner conveyor 6 is kinematically independent of conveyors 3 on subsequent storage levels, it is easy to achieve smooth and laminar flow S in transfer units 5, because the second speed v2 of the inner conveyor is not strictly dependent on the fifth speed v5 of the upper conveyor 3. The need for correction may be implemented based on signals from flow sensors. Behind the transfer unit 5, there may be a sensor 11 and a lever 12, which rests on the uppermost layer of mass flow S on the upper conveyor 3 (Fig. 3). The signal from sensor 11 can indicate correct flow or a disturbance in flow S at the inlet of the upper conveyor 3, i.e. flow thickness that is too low or too high.

Each of the conveyors in the transfer unit 5 may be driven by an individual drive. It is possible to build the transfer unit 5 so that all the conveyors are driven by a single common drive M, as shown in Fig. 5. The drive may be implemented in any way, for simplicity, in Fig. 5 the drive is implemented by means of a gear belt transmission.

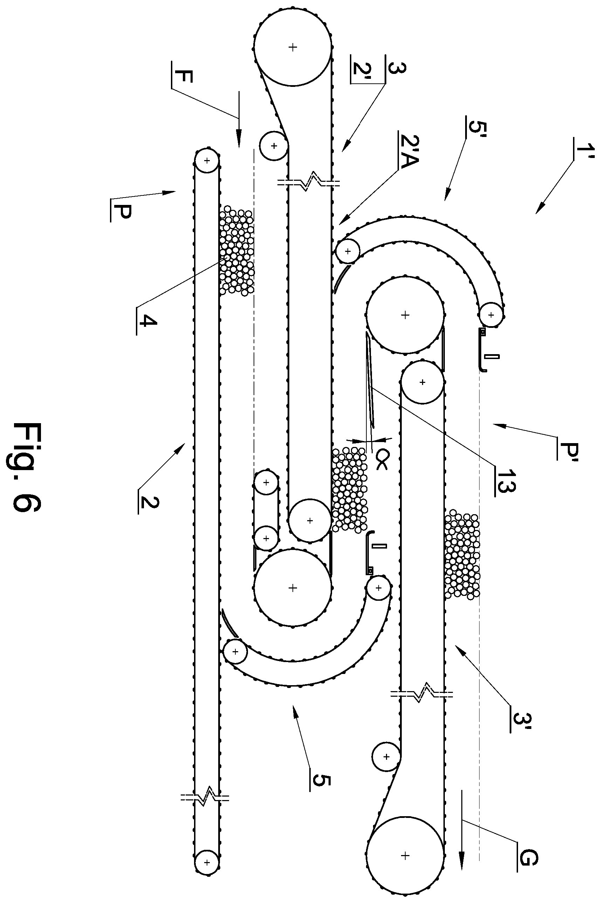

Fig. 6 shows a storage 1' in the second embodiment, in which two pairs of conveyors may be identified, namely the first pair P comprising the lower conveyor 2 and the upper conveyor 3, and the second pair P' comprising the lower conveyor 2' (in the first pair P, this is the upper conveyor 3) and the upper conveyor 3'. The first transfer unit 5 is assigned to the first pair P, and the second transfer unit 5' is assigned to the second pair P'. Similarly to the first embodiment, the inlet to the storage 1' is marked as F, and the outlet of the storage 1' is marked as G. The first pair P is assigned an input stabilizer 9 in the form of a conveyor, while the second pair P' is assigned an input stabilizer in the form of a slide 13. The slide 13 may be positioned parallel to the lower conveyor 2' or may be located convergently with the lower conveyor 2' in relation to the direction of mass flow. In the embodiment shown in Fig. 6, the slide 13 is positioned at an angle α to the horizontal and to the carrying surface 2'A of the lower conveyor 2', in the range from 1° to 5°.

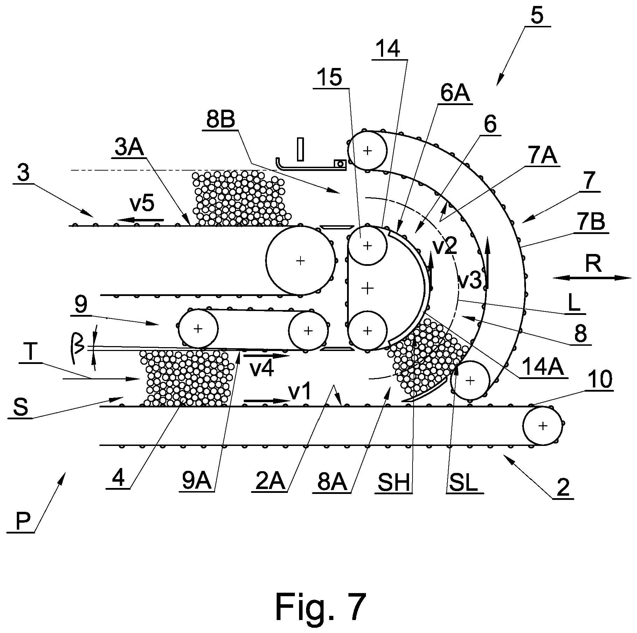

In the embodiment shown in Fig. 7, analogous to the embodiment shown in Fig. 3, the inner transfer conveyor 6 comprises a chain conveyor having humps, wherein the chain 14 is wound around a semicircular support 14A and two rollers 15. The pre-stabilizer 9 is positioned as shown convergently with the lower conveyor 2 in relation to the direction of the mass flow, namely the carrying surface 9A of the stabilizer 9 is positioned at an angle β to the horizontal and to the carrying surface 2A of the lower conveyor 2, in the range of 1° to 5°.

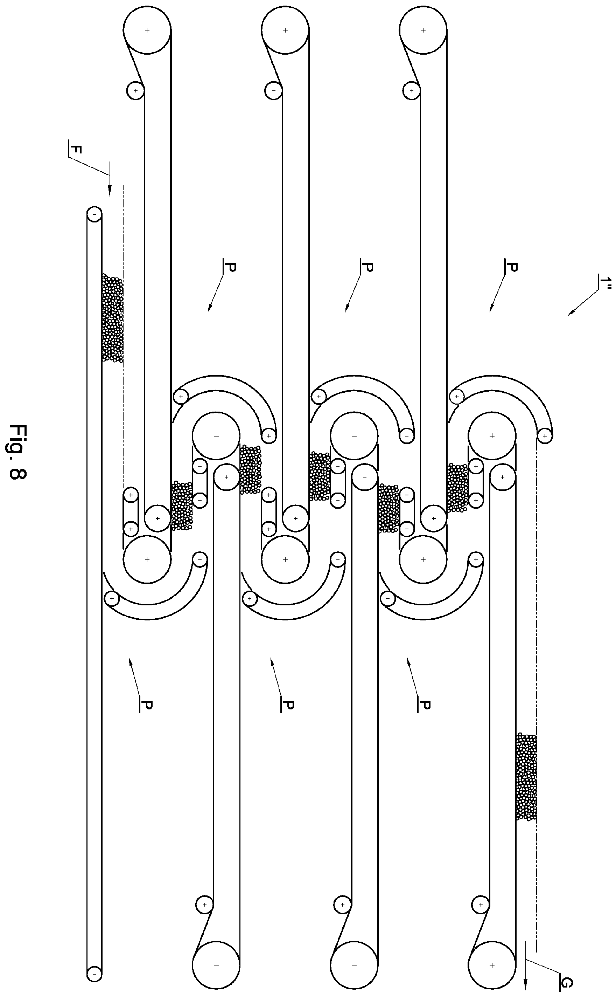

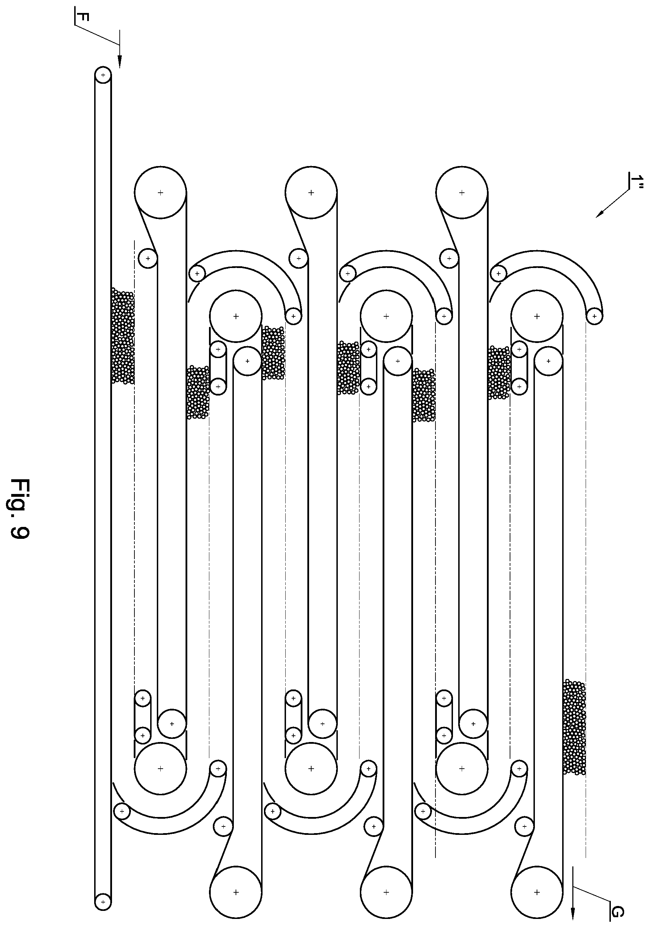

Fig. 8 shows a storage 1" comprising six pairs of conveyors P at a position close to the minimum storage capacity, while Fig. 9 shows the same storage at a position close to the maximum storage capacity. A variable capacity storage system may be designed in a linear or circular configuration. In a linear configuration, the lower conveyor 2 and the upper conveyor 3 transport rod-like articles 4 along a straight line. A variable capacity storage in a linear configuration is shown in Figs. 2, 6, 8 and 9. An example of a storage in a circular configuration is shown in the top view in Fig. 10, for which the views shown in Figs. 2, 6, 8 and 9 will constitute an developed view of the side surface. Conveyors 2, 3 in one or more pairs P in Fig. 10 have a common axis m, which for the movable upper conveyors 3 in pairs P is the axis of rotation during movement relative to the lower conveyors 2, or for the movable lower conveyors 2 in pairs P is the axis of rotation during movement relative to the upper conveyors 3.

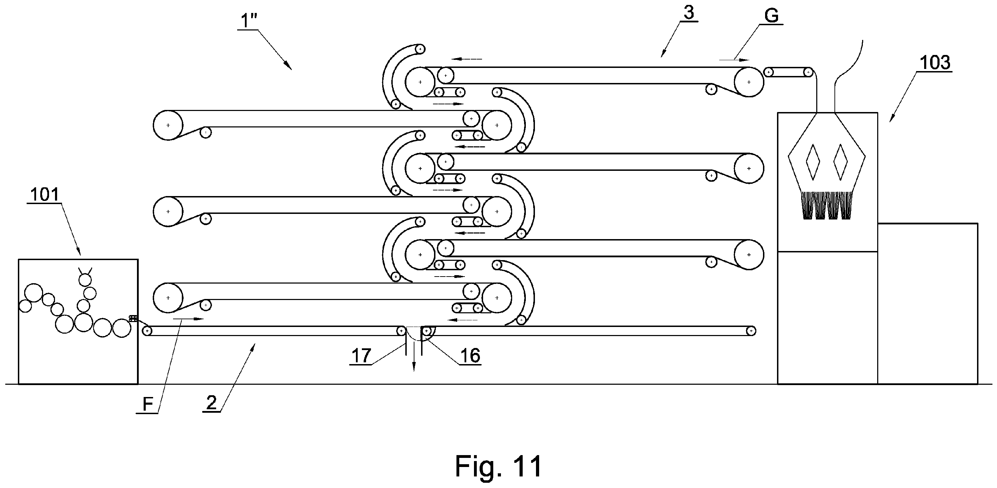

Fig. 11 shows a storage with conveyors in a linear or circular configuration (in developed view) located in line between the production machine 101 for manufacturing rod-like articles 4 and the packaging machine 103 for packaging rod-like articles 4. In contrast to the state-of-the-art production line shown in Fig. 1, the rod-like articles 4 travel a very short distance from the manufacture machine 101 to the storage 1‴, as shown, it is possible to feed the rod-like articles 4 directly onto the lowest conveyor of the storage 1‴, i.e. the lower conveyor 2 of the lowest pair P of conveyors. Similarly, the rod-like articles 4 flowing out of the outlet of the storage 1" travel a very short distance from the highest conveyor, i.e. the upper conveyor 3 of the highest pair P of conveyors, to the packaging machine 103. The total distance travelled by the rod-like articles 4 has been shortened to the maximum extent possible.

In the storage 1" shown in Fig. 11, the lowermost lower conveyor 2 is provided with a valve 16 enabling the removal of rod-like articles 4 from the storage, for example after completion of work. Valve 16 is swing mounted, in the position of the valve 16 shown with a solid line, rod-like articles 4 may be removed through the discharge channel 17. In the position of the valve 16 shown with a dotted line, the mass flow S is maintained as in the storage in Figs. 8 and 9. The removal of rod-like articles 4 from storage 1" (marked with dotted arrows) may be achieved by reversing the directions of movement of the conveyors: the lower conveyor 2, the upper conveyor 3 in each pair P, the inner transfer conveyor 6, the outer transfer conveyor 7 and the pre-stabilizer 9 in each transfer unit 5 for each pair P. The transfer unit 5 is adapted to transport rod-like articles 4 both from bottom to top and from top to bottom.

In the method according to the invention, rod-like articles 4 of the tobacco industry are transported in the storage 1 in the form of a mass flow (multi-layer stream) S. The rod-like articles 4 are positioned with their axes transversely to the direction T of the flow, i.e. the direction of movement of the rod-like articles 4 in the mass flow S. The rod-like articles 4 are transported on the lower conveyor 2, the rod-like articles 4 are carried on the carrying surface 2A of the lower conveyor 2. The rod-like articles 4 are transferred to the upper conveyor 3 by means of a transfer unit 5, namely, rod-like articles 4 are transferred from the lower conveyor 2 to the upper conveyor 3 along an arcuate path L through the transfer channel 8 formed by the inner carrying surface 6A of the inner transfer conveyor 6 and the outer carrying surface 7A of the outer transfer conveyor 7 facing each other. Besides, the flow of stream S from the lower conveyor 2 to the transfer channel 8 is assisted by a pre-stabilizer 9 positioned above the lower conveyor 2. The working surface of the pre-stabilizer 9 is the carrying surface 9A facing downwards towards the mass flow S carried by the carrying surface 2A of the lower conveyor 2. The fourth speed v4 of the carrying surface 9A of the pre-stabilizer 9 is equal to the first speed v1 of the lower conveyor 2, namely the first speed v1 of the carrying surface 2A of the lower conveyor 2. The preliminary stabilizer 9 protects the stream S from rolling and the rod-like articles 4 from being lifted out of the mass flow S. The mass flow S of the rod-like articles 4 is introduced into the transfer channel 8 through the inlet 8A. The uppermost layer SH in stream S comes into contact with the carrying surface 6A of the inner transfer conveyor 6. This uppermost layer SH of stream S, which becomes the inner layer in transfer channel 8, is set to a second velocity v2 that is lower than the first velocity v1 of the lower conveyor 2. The lowermost layer SL in the mass flow S comes into contact with the carrying surface 7A of the outer transfer conveyor 7 and becomes the outer layer in the transfer channel 8. This lowermost layer SL of the stream S, which becomes the outer layer in the transfer channel, is set to a third velocity v3 by the outer transfer conveyor 7, which is larger than the first velocity v1 of the lower conveyor 2. Further on in the transfer channel 7, the rod-like articles 4 do not alter their position relative to each other.

When transporting rod-like articles 4 from the lower conveyor 2 to the upper conveyor 3, the upper conveyor 3 may alter its position relative to the lower conveyor 2 or remain stationary in one position above the lower conveyor 2. When the upper conveyor 3 is moved, the transfer channel 8 also alters its position relative to the lower conveyor 2. When the lower conveyor 2 alters its position relative to the stationary upper conveyor 3, the transfer channel 8 remains stationary relative to the lower conveyor 2.

## Claims

1. A variable-capacity storage (1, 1', 1") for rod-like articles (4) of the tobacco industry stored in the form of a mass flow (S) consisting of multiple layers of rod-like articles (4), provided with
at least two conveyors (2, 3), for conveying rod-like articles in the form of a mass flow (S), positioned one above the other,
wherein two adjacent conveyors form a pair (P) of conveyors comprising a lower conveyor (2) and an upper conveyor (3), at least one conveyor in the pair (P) of conveyors being movable relative to the other,
wherein moving at least one conveyor (2, 3) in the pair (P) of conveyors (2, 3) alters the capacity of the storage (1, 1', 1"),
**characterized in that**
it comprises a transfer unit (5) arranged to transport rod-like articles (4) from the lower conveyor (2) upwards to the upper conveyor (3), wherein
the transfer unit (5) is provided with
an inner conveyor (6) operating at a second speed (v2) smaller than the first speed (v1) of the lower conveyor (3), and
an outer conveyor (5) operating at a third speed (v3) larger than the first speed (v1) of the lower conveyor (3).

2. The storage according to claim 1, **characterized in that** in the transfer unit (5) the inner conveyor (6) takes the form of a transport wheel rotating at such a rotational speed (ω) that its carrying surface (6A), provided with humps (10), moves at the second speed (v2)

3. The storage according to claim 1, **characterized in that** in the transfer unit (5) the inner conveyor (6) comprises a transport chain (14) provided with humps (10) arranged such that its carrying surface (6A) moves at the second speed (v2).

4. The storage device according to any of claims 1 to 3, **characterized in that** the transfer unit (5) is additionally provided with a pre-stabilizer (9) located above the lower conveyor (2) and arranged to stabilize the surface of the mass flow (S) in front of the inner conveyor (6), preventing the mass flow (S) from being lifted.

5. The storage according to any of claims 1 to 4, **characterized in that** the pre-stabilizer (9) is a conveyor located parallel to the lower conveyor (2) or converging with the lower conveyor (2).

6. The storage according to claim 5, **characterized in that** a fourth speed (v4) of the pre-stabilizer (9) is equal to the first speed (v1) of the lower conveyor (2).

7. The storage according to claim 5, **characterized in that** a fourth speed (v4) of the pre-stabilizer (9) is larger than the first speed (v1) of the lower conveyor (2).

8. The storage according to any of claims 1 to 7, **characterized in that** the inner conveyor (6), the outer conveyor (7) and the pre-stabilizer (9) have a common drive.

9. The storage according to any of claims 1 to 4, **characterized in that** the pre-stabilizer (9) is in the form of a slide located parallel to the lower conveyor (2) or converging with the lower conveyor (2).

10. The storage according to any of claims 1 to 9, **characterized in that** it is arranged such that the directions of operation of conveyors (2, 3, 6, 7, 14) are alternatively reversed so that the mass flow is transferred from the upper conveyor (3) to the lower conveyor (2).

11. The storage according to any of claims 1 to 10, **characterized in that** the upper conveyor (3) and the lower conveyor (2) are circular in shape and concentric with relation to a vertical axis (m).

12. The storage according to any of claims 1 to 10, **characterized in that** the upper conveyor (3) and the lower conveyor (2) are shaped linearly.

13. A method of transporting rod-like articles (4) of the tobacco industry transversely to the axis of the rod-like articles (4) from the lower conveyor (2) for transporting a stream (S) of rod-like articles (4) to the upper conveyor (3) for transporting the stream (S) of rod-like articles (4), wherein the lower conveyor (2) and the upper conveyor (3) are movable relative to each other,
**characterized in that**
- rod-like articles (4) are transferred from the lower conveyor (2) to the upper conveyor (3) along an arcuate path (L) by means of a transfer unit (5),
- during the alteration of position of the upper conveyor (3) and the lower conveyor (2) relative to each other, the position of the transfer unit (5) above the carrying surface (2A) of the lower conveyor (2) alters and the storage capacity (1, 1', 1") alters,
- the outer layer (SL) of rod-like articles (4) in the stream (S) in the transfer channel (8) of the transfer unit (5) is set to a third speed (v3) larger than the first speed (v1) of the lower conveyor (2) by the outer transfer conveyor (7),
- the inner layer (SH) of rod-like articles (4) in the stream (S) in the transfer channel (8) of the transfer unit (5) is set to a second speed (v2) lower than the first speed (v1) of the lower conveyor (2) by means of the inner transfer conveyor (6).

14. The method according to claim 13, **characterized in that** the flow of the stream (S) from the lower conveyor (2) to the transfer channel (8) of the transfer unit (5) is assisted by a stabilizer (9) located above the lower conveyor (2).

15. The method according to claim 13 or 14, **characterized in that** the direction of operation of the conveyors (2, 3, 6, 7, 14) is alternatively reversed such that rod-like articles (4) are transferred in the form of a mass flow (S) from the upper conveyor (3) to the lower conveyor (2).
